# NEUE EUROPÄISCHE PATENTSCHRIFT

(11) **EP 1 284 836 B2**
(45) Veröffentlichungstag und Bekanntmachung des Hinweises auf die Entscheidung über den Einspruch: **29.10.2008**
(45) Hinweis auf die Patenterteilung: 23.06.2004
(21) Anmeldenummer: 01943224.4
(22) Anmeldetag: 06.04.2001
(51) Int. Cl.: B23B 51/04

(54) **VOLLBOHRER FÜR WERKZEUGMASCHINEN**
SOLID DRILL BIT FOR MACHINE TOOLS
FORET PLEIN DE MACHINES-OUTILS

(30) Priorität: 05.05.2000 DE 10021879
(43) Veröffentlichungstag der Anmeldung: 26.02.2003
(73) Patentinhaber: KOMET GROUP Holding GmbH, 74354 Besigheim (DE)
(72) Erfinder: FRITSCH, Andree, 74392 Freudental (DE); HAIDINGER, Hans, 74385 Pleidelsheim (DE); KRAUSE, Alexander, 74366 Meimsheim (DE); KRUSZYNSKI, Jacek, 70190 Stuttgart (DE); MORLOK, Helmut, 74369 Löchgau (DE); RÖSER, Frank, 74376 Gemmrigheim (DE); SCHÜTT, Henry, 74343 Sachsenheim (DE); THEODOROU, Miltiadis, 74382 Neckarwestheim (DE)
(74) Vertreter: Wolf, Eckhard
(86) Internationale Anmeldenummer: PCT/EP2001/003923
(87) Internationale Veröffentlichungsnummer: WO 2001/085375

(56) Entgegenhaltungen:
- - -
- US-A- 3 963 365
- US-A- 4 563 113
- US-A- 5 758 997
- US-A- 5 782 587
- PATENT ABSTRACTS OF JAPAN vol. 009, no. 252 (M-420), 9. Oktober 1985 (1985-10-09) & JP 60 104604 A (FUJIKOSHI:KK), 10. Juni 1985 (1985-06-10)

## Beschreibung

Die Erfindung betrifft ein Bohrwerkzeug für Werkzeugmaschinen zum Bohren ins Volle mit einem Bohrerkörper und mit mindestens zwei in radialem Abstand voneinander in einer Ausnehmung des Bohrerkörpers im Bereich einer Spanfördernut angeordneten, im Umriß rechteckigen oder quadratischen, mit ihren stirnseitigen Hauptschneiden axial über den Bohrkörper überstehenden und in ihrem Wirkungsbereich einander radial überlappenden Umsetzschneidplatten, wobei die radial äußere Umsetzschneidplatte mit ihrer äußeren abgerundeten Schneidenecke und mit ihrer daran anschließenden, zur betreffenden Hauptschneide senkrechten Nebenschneide radial über den Umfang des Bohrerkörpers übersteht und wobei die Nebenschneide von der Schneidenecke aus in ihrer Längserstreckung unter einem definierten Anstellwinkel kleiner als 3,2° in Richtung Bohrerkörper geneigt ist.

Bohrwerkzeuge dieser Art mit zwei quadratischen Umsetzschneidplatten sind beispielsweise aus der US-A-4,563,113 bekannt. Die beiden quadratischen Schneidplatten sind in unterschiedlichen radialen Abständen voneinander angeordnet. Sie stehen mit ihren stimseitigen Hauptschneiden mit positivem Stimwinkel axial über den Bohrerkörper über. Im Falle der äußeren Schneidplatte ist der Anstellwinkel zwischen der Längserstreckung der Nebenschneide und der Bohrerachse mindestens 10°. Außerdem weist die äußere Schneidplatte dort eine schräg nach hinten und außen gerichtete Hilfsschneide auf, mit der sie gegen die Wand der erzeugten Bohrung anliegt. Die Hilfsschneide weist einen stumpfen Winkel in der Größenordnung von 135° gegenüber der aktiven Hauptschneide auf. Andererseits liegt die zur Hauptschneide senkrechte Schneide aufgrund des großen Anstellwinkels nicht gegen die Bohrungswand an.

Weiter ist es bei einem Bohrwerkzeug für Werkzeugmaschinen zum Bohren ins Volle mit einer inneren und einer äußeren Umsetzschneidplatte der eingangs angegebenen Art bekannt (US-A-6,039,515), dass der Anstellwinkel der Nebenschneide der äußeren Schneidplatte kleiner 3,2° ist. Im Übrigen geht es dort um eine spezielle Ausbildung der wirksamen Schneidkante der inneren Schneidplatte, die im Bohrwerkzeug durch die äußere Schneidplatte partiell überlappt wird, um einen unerwünschten Abrieb an diesen Stellen zu vermeiden.

Ausgehend hiervon liegt der Erfindung die Aufgabe zugrunde, ein Bohrwerkzeug der eingangs angegebenen Art zu entwickeln, bei welchem nachteilige Auswirkungen des Verschleisses an den Haupt- und Nebenschneiden beim Umsetzen der äußersten Umsetzschneidplatte vermieden werden.

Zur Lösung dieser Aufgabe werden die im Patentanspruch 1 angegebenen Merkmale vorgeschlagen. Vorteilhafte Ausgestaltungen und Weiterbildungen der Erfindung ergeben sich aus den abhängigen Ansprüchen.

Die erfindungsgemäße Lösung besteht vor allem darin, dass die Nebenschneide der äußersten Umsetzschneidplatte eine Führungskante und eine gegenüber der Führungskante radial nach innen versetzte Nebenschneidkante aufweist, wobei die Führungskante beim Bohrvorgang unter der Einwirkung einer radial nach außen weisenden Abdrängkraft zumindest über einen Teil ihrer Länge gegen die Wand der erzeugten Bohrung gleitend anliegt und wobei die Führungskante durch eine Freiflächenfase und/oder -rundung der Nebenschneide gebildet ist. Da die Nebenschneide einer Umsetzschneidplatte beim Umsetzen zur Hauptschneide werden kann, wird mit diesen Maßnahmen erreicht, dass es zu keinem Verschleiß im unmittelbaren Bereich der Schneidkante kommt.

Eine vorteilhafte Ausgestaltung der Erfindung sieht vor, dass der Anstellwinkel der Nebenschneide 1,2° bis 2,2° beträgt.

Vorteilhafterweise liegt die Nebenschneide über mehr als 20 %, vorzugsweise über 30 % bis 60 % der Länge ihrer Führungskante gegen die Bohrungswand gleitend an. Vor allem beim kleinstmöglichen Anstellwinkel wird bei gegebenem Elastizitätsmodul des Werkstückmaterials erreicht, daß die Nebenschneide über die gesamte Länge ihrer Führungskante gegen die Bohrungswand gleitend anliegt. Die Grenze des Anstellwinkels ist erreicht, wenn es im Bereich der Nebenschneide zu einer spanabhebenden Reibwirkung kommt.

Die richtige Positionierung der Umsetzschneidplatte im Werkzeug läßt sich daran erkennen, daß es beim Bohrvorgang zwar im Bereich der Freiflächenfase zumindest über einen Teil der Nebenschneidenlänge zu einer Materialglättung kommt, nicht jedoch im unmittelbaren Bereich der Nebenschneidenkante. Diese Erscheinung ist ein Zeichen dafür, daß die Nebenschneide unter partieller elastischer Verformung und gegebenenfalls unter Glättung von Unebenheiten gegen die Bohrungswand gleitend anliegt.

Eine weitere Verbesserung in dieser Hinsicht wird erreicht, wenn die Umsetzschneidplatten zumindest im Bereich ihrer Haupt- und Nebenschneiden eine reibungsmindernde, verschleißfeste Beschichtung tragen. Diese kann beispielsweise aus einem Material der Gruppe Titannitrid, Titancarbonitrid, Aluminiumnitrid oder Aluminiumoxid bestehen.

Eine vorteilhafte Ausgestaltung der Erfindung sieht vor, daß die innere Schneidplatte mit ihrer inneren abgerundeten Schneidenecke die Bohrerachse übergreift. Mit dieser Maßnahme wird erreicht, daß im Bereich der inneren und der äußeren Umsetzschneidplatten etwa gleich große Spanräume entstehen, die sich von der Hauptschneide aus erweitern. Dadurch wird sichergestellt, daß die beim Bohrvorgang entstehenden relativ breiten Späne ohne Verklemmungsgefahr durch die Spanfördemuten abgeführt werden können.

Die Zentriereigenschaften des Bohrwerkzeugs können verbessert werden, wenn die Hauptschneide der inneren Umsetzschneidplatte einen vorschneidenden Abstand von der Hauptschneide der äußeren Umsetzschneidplatte aufweist, der kleiner als der Eckradius, vorzugsweise kleiner als 30 % des Eckradius der Umsetzschneidplatten ist. In absoluten Maßeinheiten ausgedrückt beträgt der vorschneidende Abstand weniger als 0,5 mm, vorzugsweise 0,15 bis 0,3 mm.

Zur Optimierung der radial wirkenden Abdrängkräfte wird gemäß einer weiteren vorteilhaften Ausgestaltung der Erfindung vorgeschlagen, daß der Stimwinkel der Hauptschneiden der inneren Umsetzschneidplatte größer als, vorzugsweise doppelt so groß wie der Stirnwinkel der äußeren Umsetzschneidplatte ist.

Zur weiteren Optimierung der am Bohrwerkzeug beim Bohrvorgang angreifenden radialen Abdrängkräfte wird gemäß einer bevorzugten Ausgestaltung der Erfindung vorgeschlagen, daß die Hauptschneide der äußeren Umsetzschneidplatte gegenüber der Hauptschneide der inneren Umsetzschneidplatte in der Drehrichtung um die Bohrerachse einen Winkel einschließt, der kleiner als 180° ist. Mit dieser Maßnahme kann zudem erreicht werden, daß im Bereich der inneren und der äußeren Umsetzschneidplatten ein etwa gleich großer Durchtrittsquerschnitt der Spanfördemuten vorhanden ist.

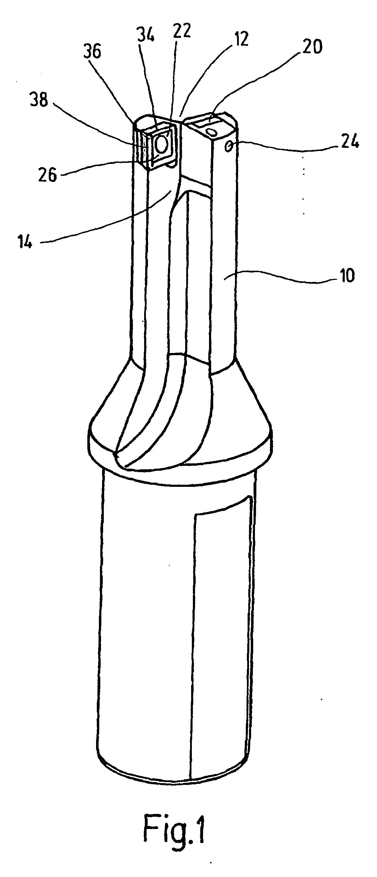

Im folgenden wird die Erfindung anhand eines in der Zeichnung in schematischer Weise dargestellten Ausführungsbeispiels näher erläutert. Es zeigen
- Fig. 1: einen Vollbohrer für Werkzeugmaschinen mit quadratischen Umsetzschneidplatten in schaubildlicher Darstellung;
- Fig. 2a: bis c eine Draufsicht und zwei ausschnittsweise Seitenansichten des Vollbohrers nach Fig. 1;
- Fig. 3a: eine ausschnittsweise Schnittdarstellung der Nebenschneide der äußeren Umsetzschneidplatte des Bohrwerkzeugs nach Fig. 1 und 2 mit Führungskante im Bereich einer Freiflächenfase;
- Fig. 3b: und c einen Ausschnitt aus Fig. 3a mit einer Rundung und mit einer zusätzlichen Fase im Bereich der Freifläche der Nebenschneide.

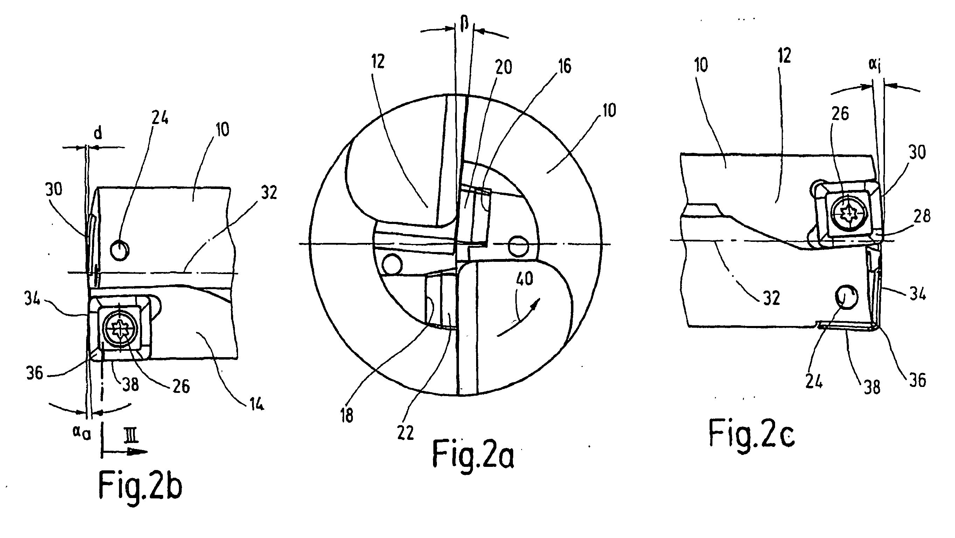

Das in der Zeichnung dargestellte Werkzeug ist als Vollbohrer für Werkzeugmaschinen bestimmt. Es weist einen im wesentlichen zylindrischen Bohrerkörper 10 auf, der mit zwei Spanfördernuten 12,14 versehen ist. Am stimseitigen Ende der Spanfördemuten ist je eine Ausnehmung 16,18 zur Aufnahme einer quadratischen Umsetzschneidplatte 20,22 vorgesehen. Die Umsetzschneidplatten 20,22 sind mit je einer in eine Gewindebohrung 24 des Bohrkörpers 10 eingreifenden Senkkopfschraube 26 am Bohrerkörper 10 befestigt. Wie aus Fig. 2a bis c zu ersehen ist, übergreift die innere Umsetzschneidplatte 22 mit der inneren abgerundeten Schneidenecke 28 an ihrer stimseitigen Hauptschneide 30 die Bohrerachse 32, während die äußere Umsetzschneidplatte 22 mit ihrer Hauptschneide 34 im Bereich der äußeren abgerundeten Schneidenecke 36 und mit ihrer äußeren Nebenschneide 38 über den Umfang des Bohrerkörpers 10 übersteht. Außerdem sind die Umsetzschneidplatten mit ihren Haupt- und Nebenschneiden so gegenüber dem Bohrerkörper 10 gekippt angeordnet, daß die Hauptschneiden gegenüber einer zur Bohrerachse senkrechten Ebene einen positiven Winkel αᵢ = 4° bzw. αₐ = 2° einschließen, wobei mit den Indices i und a die innere bzw. äußere Platte gekennzeichnet sind. Da die Nebenschneide 38 senkrecht zur betreffenden Hauptschneide 34 ausgerichtet ist, ist bei dem gezeigten Ausführungsbeispiel die Nebenschneide 38 von der Schneidenecke 36 aus in ihrer Längserstreckung unter einem Anstellwinkel in Richtung Bohrerkörper geneigt, der dem Winkel αₐ entspricht. Aus Fig. 2a ist weiter ersichtlich, daß die Hauptschneide 34 der äußeren Umsetzschneidplatte 22 mit der Hauptschneide 30 der inneren Umsetzschneidplatte 20 in der durch den Pfeil 40 angedeuteten Drehrichtung um die Bohrerachse 32 einen Winkel einschließt, der um den Winkel β kleiner ist als 180°. Bei dem gezeigten Ausführungsbeispiel beträgt der Winkel β etwa 5°. Schließlich ist aus Fig. 2b zu ersehen, daß die Hauptschneide 30 der inneren Umsetzschneidplatte 20 einen vorschneidenden Abstand d von der Hauptschneide 34 der äußeren Umsetzschneidplatte 22 aufweist, der kleiner als der Eckradius der Hauptschneiden ist und der bei dem gezeigten Ausführungsbeispiel 0,23 mm beträgt. Die Winkel αᵢ, αₐ und β und der vorschneidende Abstand d sind so gewählt, daß der Bohrer mit einer definierten radialen Abdrängkraft im Bereich seiner äußeren Nebenschneide 38 gegen die Wand 42 der erzeugten Bohrung gleitend anliegt.

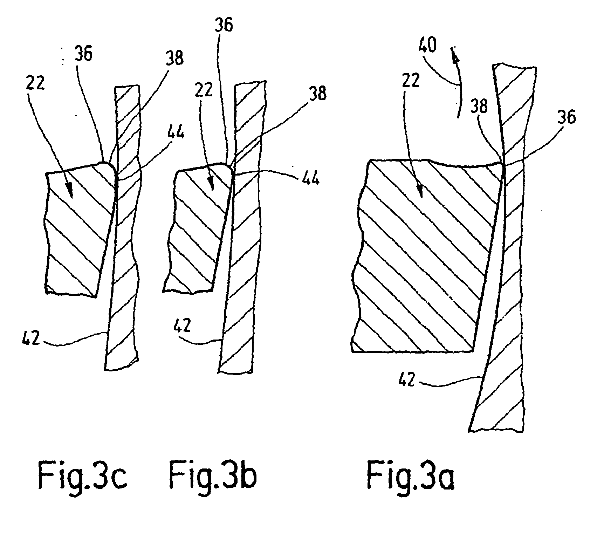

Die Nebenschneide 38 weist zu diesem Zweck eine Führungskante 44 auf, mit der die äußere Umsetzschneidplatte 22 gleitend gegen die Bohrungswand 42 anliegt. Die Führungskante 44 ist bei der in Fig. 3b gezeigten Ausführungsform durch eine Freiflächenrundung der Nebenschneide gebildet, während sie im Falle der Fig. 3c durch eine Freiflächenfase gebildet ist. Die eigentliche Schneidkante der Nebenschneide 38 ist gegenüber der Führungskante 44 etwas nach innen versetzt, so daß beim Bohrvorgang kein Verschleiß im unmittelbaren Bereich der Nebenschneide 38 auftritt. Lediglich die Führungskante wird aufgrund ihrer gleitenden Anlage gegen die Bohrungswand geglättet. Aufgrund des sehr kleinen Anstellwinkels der Nebenschneide 38 gegenüber der Bohrerachse 32 liegt die Nebenschneide mit ihrer Führungskante 44 zumindest über einen Teil ihrer Länge gegen die Bohrungswand an. Dadurch werden die Abdrängkräfte über eine größere Fläche verteilt, so daß es im Bereich der Nebenschneide zu keiner Zerspanung, sondern allenfalls zu einer Glättung der Bohrungswand kommt. Zur Verbesserung der Gleitwirkung können die Umsetzschneidplatten mit einer reibungsmindernden Schicht beispielsweise aus Titannitrid, Titancarbonitrid, Aluminiumnitrid oder Aluminiumoxid versehen werden.

Die beschriebene Anordnung der Umsetzschneidplatten 20,22 in den Spanfördemuten sorgt dafür, daß ein ausreichender, sich etwas erweiternder Durchtrittsquerschnitt für die Späne bildet und daß für die Umsetzschneidplatten dennoch ein stabiler Unterbau am Bohrerkörper 10 verbleibt.

Zusammenfassend ist folgendes festzuhalten: Die Erfindung bezieht sich auf einen Vollbohrer für Werkzeugmaschinen. Der Vollbohrer weist einen Bohrerkörper 10 und zwei in radialem Abstand voneinander in je einem Plattensitz 16,18 des Bohrerkörpers 10 im Bereich einer Spanfördernut 12,14 angeordneten Umsetzschneidplatten 20,22 auf. Die Umsetzschneidplatten 20,22 weisen einen rechteckigen oder quadratischen Umriß auf. Sie stehen mit ihren stimseitigen Hauptschneiden 30,34 axial über den Bohrerkörper 10 über und überlappen einander radial in ihrem Wirkbereich. Die radial äußere Umsetzschneidplatte 22 steht mit ihrer äußeren Schneidenecke 36 und mit ihrer daran anschließenden, zur betreffenden Hauptschneide 34 senkrechten Nebenschneide 38 radial über den Umfang des Bohrerkörpers 10 über. Außerdem ist die betreffende Nebenschneide 38 von der Schneidenecke 36 aus in ihrer Längserstreckung unter einem Anstellwinkel in Richtung Bohrerkörper 10 um einen definierten Anstellwinkel geneigt, der kleiner als 3,2° ist. Die Nebenschneide 38 weist eine Führungskante 44 auf, mit der sie beim Bohrvorgang unter der Einwirkung einer radial nach außen weisenden Abdrängkraft zumindest über einen Teil ihrer Länge gegen die Wand 42 der erzeugten Bohrung gleitend anliegt.

## Patentansprüche

1. Vollbohrer für Werkzeugmaschinen mit einem Bohrerkörper (10) und mit mindestens zwei in radialem Abstand voneinander in je einer Ausnehmung (16,18) des Bohrerkörpers (10) im Bereich einer Spanfördernut (12,14) angeordneten, im Umriss rechteckigen oder quadratischen, mit ihren stirnseitigen Hauptschneiden (30,34) axial über den Bohrerkörper (10) überstehenden und in ihrem Wirkbereich einander radial überlappenden Umsetzschneidplatten (20,22), wobei die radial äußerste Umsetzschneidplatte (22) mit ihrer äußeren abgerundeten Schneidenecke (36) und mit ihrer daran anschließenden, zur betreffenden Hauptschneide (34) senkrechten Nebenschneide (38) radial über den Umfang des Bohrerkörpers (10) übersteht und wobei die betreffende Nebenschneide (38) von der Schneidenecke (36) aus in ihrer Längserstreckung unter einem definierten Anstellwinkel (αₐ) kleiner als 3,2° in Richtung Bohrerkörper geneigt ist, **dadurch gekennzeichnet, dass** die Nebenschneide (38) der äußersten Umsetzschneidplatte (22) eine Führungskante (44) und eine gegenüber der Führungskante radial nach innen versetzte Nebenschneidkante aufweist, wobei die Führungskante (44) beim Bohrvorgang unter der Einwirkung einer radial nach außen weisenden Abdrängkraft zumindest über einen Teil ihrer Länge gegen die Wand (42) der erzeugten Bohrung gleitend anliegt, und wobei die Führungskante durch eine Freiflächenfase und/oder -rundung der Nebenschneide (38) gebildet ist.

2. Vollbohrer nach Anspruch 1, **dadurch gekennzeichnet, dass** der Anstellwinkel (αₐ) 1,2° bis 2,2° beträgt.

3. Vollbohrer nach Anspruch 1 oder 2, **dadurch gekennzeichnet, dass** die äußere Nebenschneide (38) der äußersten Umsetzschneidplatte (22) über mehr als 20 % der Länge ihrer Führungskante (44) gegen die Bohrungswand (42) gleitend anliegt.

4. Vollbohrer nach einem der Ansprüche 1 bis 3, **dadurch gekennzeichnet, dass** die äußere Nebenschneide (38) der äußersten Umsetzschneidplatte (22) über 30 % bis 60 % der Länge ihrer Führungskante (44) gegen die Bohrungswand (42) gleitend anliegt.

5. Vollbohrer nach einem der Ansprüche 1 bis 4, **dadurch gekennzeichnet, dass** die Nebenschneide (38) über die gesamte Länge ihrer Führungskante (44) gegen die Bohrungswand (42) gleitend anliegt.

6. Vollbohrer nach einem der Ansprüche 1 bis 5, **dadurch gekennzeichnet, dass** die äußere Nebenschneide (38) der äußersten Umsetzschneidplatte (22) unter partieller elastischer Verformung gegen die Bohrungswand (42) gleitend anliegt.

7. Vollbohrer nach einem der Ansprüche 1 bis 6, **dadurch gekennzeichnet, dass** die äußere Nebenschneide (38) der äußersten Umsetzschneidplatte (22) unter Glättung von Unebenheiten gegen die Bohrungswand (42) gleitend anliegt.

8. Vollbohrer nach einem der Ansprüche 1 bis 7, **dadurch gekennzeichnet, dass** die innerste Umsetzschneidpiatte (20) mit ihrer Hauptschneide (30) im Bereich ihrer inneren abgerundeten Schneidenecke (28) die Bohrerachse (32) übergreift.

9. Vollbohrer nach einem der Ansprüche 1 bis 8 **dadurch gekennzeichnet, dass** die Hauptschneide (30) der innersten Umsetzschneidplatte (20) einen vorschneidenden Abstand (d) von der Hauptschneide (34) der äußersten Umsetzschneidplatte (22) aufweist, der kleiner als der Eckradius der Hauptschneide ist.

10. Vollbohrer nach Anspruch 9, **dadurch gekennzeichet, dass** der vorschneidende Abstand (d) weniger als 50 % des Eckradius beträgt.

11. Vollbohrer nach Anspruch 9 oder 10, **dadurch gekennzeichnet, dass** der vorschneidende Abstand (d) weniger als 0,5 mm, vorzugweise 0,15 bis 0,3 mm beträgt.

12. Vollbohrer nach einem der Ansprüche 1 bis 11, **dadurch gekennzeichnet, dass** der Stirnwinkel (αᵢ) der Hauptschneide (30) der innersten Umsetzschneidplatte (20) größer ist als der Stirnwinkel (αₐ) der Hauptschneide (34) der äußersten Umsetzschneidplatte (22).

13. Vollbohrer nach Anspruch 12, **dadurch gekennzeichnet, dass** der Stirnwinkel (αᵢ) der Hauptschneide (30) der innersten Umsetzschneidplatte (20) doppelt so groß ist wie der Stirnwinkel (αₐ) der Hauptschneide (34) der äußersten Umsetzschneidplatte (22).

14. Vollbohrer nach einem der Ansprüche 1 bis 13, **dadurch gekennzeichnet, dass** zwei Umsetzschneidplatten (20,22) vorgesehen sind, wobei die Hauptschneide (34) der äußersten Umsetzschneidplatte (22) mit der Hauptschneide (30) der innersten Umsetzschneidplatte (20) in der Drehrichtung (40) um die Bohrerachse (32) einen Winkel einschließt, der kleiner als 180° ist.

15. Vollbohrer nach einem der Ansprüche 1 bis 14, **dadurch gekennzeichnet, dass** die Umsetzschneidplatten (20,22) zumindest im Bereich ihrer Haupt- und Nebenschneiden eine reibungsmindernde, verschleißfeste Beschichtung tragen.

16. Vollbohrer nach Anspruch 15, **dadurch gekennzeichnet, dass** die Beschichtung aus einem Material der Gruppe Titannitrid, Titancarbonitrid, Aluminiumnitrid, Aluminiumoxid besteht.

## Claims

1. A solid drill bit for machine tools with a bit body (10) and at least two movable inserts (20, 22), rectangular or square in contour, each arranged at a radial distance from one another and in a recess (16, 18) in the bit body (10) in the area of a chip-conveying channel (12, 14), project with their front facing end major cutting edges (30, 34) axially beyond the bit body (10), and radially overlap one another in their working area, whereby the radially outermost movable insert (22) projects radially beyond the periphery of the bit body (10) with its outer rounded cutting edge corner (36) and with its following minor cutting edge (38), which is perpendicular to the respective major cutting edge (34), and whereby the respective minor cutting edge (38) is inclined starting out from the cutting edge corner (36) in its longitudinal extent at a defined setting angle (αₐ) is less than 3.2°in direction of the bit body, **characterized in that** the minor cutting edge (38) of the outermost movable insert (22) has a guiding edge (44) and a minor cutting edge displaced radially inwardly with respect to the guiding edge, wherein the guiding edge (44) rests slidingly during the drilling operation under the action of a radially outwardly directed thrust force at least over a part of its length against the wall (42) of the created bore and wherein the guiding edge is formed by a land of the flank and/or curvature of the minor cutting edge (38).

2. The solid drill bit according to Claim 1, **characterized in that** the setting angle (αₐ) is 1.2° to 2.2°.

3. The solid drill bit according to Claim 1 or 2, **characterized in that** the outer minor cutting edge (38) of the outermost movable insert (22) rests slidingly over more than 20% of the length of its guiding edge (44) against the wall (42) of the bore.

4. The solid drill bit according to one of the Claims 1 to 3, **characterized in that** the outer minor cutting edge (38) of the outermost movable insert (22) rests slidingly over 30% to 60% of the length of its guiding edge (44) against the wall (42) of the bore.

5. The solid drill bit according to one of the Claims 1 to 4, **characterized in that** the minor cutting edge (38) rests slidingly over the entire length of its guiding edge (44) against the wall (42) of the bore.

6. The solid drill bit according to one of the Claims 1 to 4, **characterized in that** the outer minor cutting edge (38) of the outermost movable insert (22) rests slidingly against the wall (42) of the bore under a partial elastic deformation.

7. The solid drill bit according to one of the Claims 1 to 6, **characterized in that** the outer minor cutting edge (38) of the outermost movable insert (22) rests slidingly against the wall (42) of the bore while smoothing unevennesses.

8. The solid drill bit according to one of the Claims 1 to 7, **characterized in that** the innermost movable insert (20) extends with its major cutting edge (30) in the area of its inner rounded cutting edge corner (28) over the drill-bit axis (32).

9. The solid drill bit according to one of the Claims 1 to 8, **characterized in that** the major cutting edge (30) of the innermost movable insert (20) has a pre-cutting spacing (d) from the major cutting edge (34) of the outer movable insert (22), which is smaller than the corner radius of the major cutting edge.

10. The solid drill bit according to Claim 9, **characterized in that** the pre-cutting spacing (d) is less than 50% of the corner radius.

11. The solid drill bit according to Claim 9 or 10, **characterized in that** the pre-cutting spacing (d) is less than 0.5 mm, preferably 0.15 to 0.3 mm.

12. The solid drill bit according to one of the Claims 1 to 11, **characterized in that** the face angle (aᵢ) of the major cutting edge (30) of the innermost movable insert (20) is greater than the face angle (αₐ) of the major cutting edge (34) of the outermost movable insert (22).

13. The solid drill bit according to Claim 12, **characterized in that** the face angle (αᵢ) of the major cutting edge (30) of the innermost movable insert (20) is twice as large as the face angle (αₐ) of the major cutting edge (34) of the outermost movable insert (22).

14. The solid drill bit according to one of the Claims 1 to 13, **characterized in that** two movable inserts (20, 22) are provided, whereby the major cutting edge (34) of the outermost movable insert (22) defines with the major cutting edge (30) of the innermost movable insert (20) in direction of rotation (40) about the drill-bit axis (32) an angle which is smaller than 180°.

15. The solid drill bit according to one of the Claims 1 to 14, **characterized in that** the movable inserts (20, 22) carry at least in the area of their major and minor cutting edges a friction-reducing, wear-resistant coat.

16. The solid drill bit according to Claim 15, **characterized in that** the coat consists of a material of the group titanium nitride, titanium carbonitride, aluminum nitride, aluminum oxide.

## Revendications

1. Foret plein pour machines-outils, comprenant un corps (10) et au moins deux plaquettes sectionneuses convertibles (20, 22) qui sont agencées radialement à distance l'une de l'autre dans un évidement respectif (16, 18) dudit corps (10) du foret, dans la région d'une saignée (12, 14) de cheminement de copeaux, possèdent un profil rectangulaire ou carré, font saillie axialement au-delà du corps (10) du foret par leurs tranchants frontaux principaux (30, 34), et sont radialement en chevauchement mutuel dans leur zone d'action, sachant que la plaquette sectionneuse convertible (22) occupant la position radialement la plus extérieure fait saillie radialement au-delà du pourtour du corps (10) du foret, par son coin extérieur de sectionnement (36) arrondi et par son tranchant auxiliaire (38) qui se rattache audit coin et est perpendiculaire au tranchant principal (34) considéré, et sachant que le tranchant auxiliaire (38) considéré est incliné en direction du corps du foret suivant son étendue longitudinale, à partir dudit coin de sectionnement (36), en décrivant un angle d'incidence (αₐ) bien défini, inférieur à 3,2°, **caractérisé par le fait que** le tranchant auxiliaire (38) de la plaquette sectionneuse convertible la plus à l'extérieur, présente une arête de guidage (44) et une arête de tranchant auxiliaire décalée radialement vers l'intérieur par rapport à l'arête de guidage, cette dernière, lors de l'opération de perçage, portant avec contact glissant contre la paroi (42) du perçage pratiqué, au moins sur une partie de sa longueur, sous l'action d'un effet de coupe total orienté radialement vers l'extérieur et l'arête de guidage (44) étant matérialisée par un biseau et/ou un arrondi de la face de dépouille du tranchant auxiliaire (38).

2. Foret plein selon la revendication 1, **caractérisé par le fait que** l'angle d'incidence (αₐ) mesure de 1,2° à 2,2°.

3. Foret plein selon la revendication 1 ou 2, **caractérisé par le fait que** le tranchant auxiliaire extérieur (38) de la plaquette sectionneuse convertible (22) située le plus à l'extérieur porte contre la paroi (42) du perçage, avec contact glissant, sur plus de 20 % de la longueur de son arête de guidage (44).

4. Foret plein selon l'une des revendications 1 à 3, **caractérisé par le fait que** le tranchant auxiliaire extérieur (38) de la plaquette sectionneuse convertible (22) située le plus à l'extérieur porte contre la paroi (42) du perçage, avec contact glissant, sur 30 % à 60 % de la longueur de son arête de guidage (44).

5. Foret plein selon l'une des revendications 1 à 4, **caractérisé par le fait que** le tranchant auxiliaire (38) porte contre la paroi (42) du perçage, avec contact glissant, sur toute la longueur de son arête de guidage (44).

6. Foret plein selon l'une des revendications 1 à 5, **caractérisé par le fait que** le tranchant auxiliaire extérieur (38) de la plaquette sectionneuse convertible (22) située le plus à l'extérieur porte contre la paroi (42) du perçage, avec contact glissant, moyennant une déformation élastique partielle.

7. Foret plein selon l'une des revendications 1 à 6, **caractérisé par le fait que** le tranchant auxiliaire extérieur (38) de la plaquette sectionneuse convertible (22) située le plus à l'extérieur porte contre la paroi (42) du perçage, avec contact glissant, moyennant un lissage de défauts de planéité.

8. Foret plein selon l'une des revendications 1 à 7, **caractérisé par le fait que** la plaquette sectionneuse convertible (20) située le plus à l'intérieur fait saillie au-delà de l'axe (32) du foret, par son tranchant principal (30), dans la région de son coin intérieur de sectionnement (28) arrondi.

9. Foret plein selon l'une des revendications 1 à 8, **caractérisé par le fait que** le tranchant principal (30) de la plaquette sectionneuse convertible (20) située le plus à l'intérieur présente, vis-à-vis du tranchant principal (34) de la plaquette sectionneuse convertible (22) située le plus à l'extérieur, une distance (d) d'anticipation de coupe qui est plus petite que le rayon cornier du tranchant principal.

10. Foret plein selon la revendication 9, **caractérisé par le fait que** la distance (d) d'anticipation de coupe représente moins de 50 % du rayon cornier.

11. Foret plein selon la revendication 9 ou 10, **caractérisé par le fait que** la distance (d) d'anticipation de coupe mesure moins de 0,5 mm, préférentiellement de 0,15 à 0,3 mm.

12. Foret plein selon l'une des revendications 1 à 11, **caractérisé par le fait que** l'angle frontal (αᵢ) du tranchant principal (30) de la plaquette sectionneuse convertible (20), située le plus à l'intérieur, est plus grand que l'angle frontal (αₐ) du tranchant principal (34) de la plaquette sectionneuse convertible (22) située le plus à l'extérieur.

13. Foret plein selon la revendication 12, **caractérisé par le fait que** l'angle frontal (αᵢ) du tranchant principal (30) de la plaquette sectionneuse convertible (20), située le plus à l'intérieur, représente le double de l'angle frontal (αₐ) du tranchant principal (34) de la plaquette sectionneuse convertible (22) située le plus à l'extérieur.

14. Foret plein selon l'une des revendications 1 à 13, **caractérisé par** la présence de deux plaquettes sectionneuses convertibles (20, 22), sachant que le tranchant principal (34) de la plaquette sectionneuse convertible (22) située le plus à l'extérieur décrit avec le tranchant principal (30) de la plaquette sectionneuse convertible (20) située le plus à l'intérieur, dans la direction (40) de la rotation autour de l'axe (32) du foret, un angle inférieur à 180°.

15. Foret plein selon l'une des revendications 1 à 14, **caractérisé par le fait que** les plaquettes sectionneuses convertibles (20, 22) portent, au moins dans la région de leurs tranchants principaux et auxiliaires, un revêtement résistant à l'usure et atténuateur de frottement.

16. Foret plein selon la revendication 15, **caractérisé par le fait que** le revêtement est constitué d'un matériau du groupe nitrure de titane, carbonitrure de titane, nitrure d'aluminium, oxyde d'aluminium.
